# EUROPEAN PATENT APPLICATION

(11) **EP 4 717 438 A1**
(43) Date of publication of application: **01.04.2026**
(21) Application number: 25190958.6
(22) Date of filing: 22.07.2025
(51) Int. Cl.: B29C 49/06, B29C 49/78, B29C 49/30, B29C 45/76, B29C 45/84, B29C 45/04, B29C 49/12, B29C 49/02, B29C 49/42

(54) **INJECTION BLOW MOLDING MACHINE**

(30) Priority: 25.09.2024 JP 2024166680
(71) Applicant: Sumitomo Heavy Industries, Ltd., Tokyo 141-6025 (JP)
(72) Inventor: SATO, Takayuki, Chiba, 263-0001 (JP)
(74) Representative: Louis Pöhlau Lohrentz

(57) **Abstract**

Provided is an injection blow molding machine (1, 2, 3) capable of suppressing damage to a stationary member (10, 11, 13) or a rotating member (40) caused by a final molding product (600) being pinched between the stationary member (10, 11, 13) and the rotating member (40). The injection blow molding machine (1, 2, 3) includes a stationary member (10, 11, 13) that is fixed to a frame (500); a movable member (20, 21) that is movable with respect to the stationary member (10, 11, 13); a rotating member (40) that is disposed between the stationary member (10, 11, 13) and the movable member (20, 21), rotates to face the movable member (20, 21) while gripping a preform (610) after the preform (610) is molded together with the stationary member (10, 11, 13), and rotates to face the stationary member (10, 11, 13) after a final molding product (600) is molded together with the movable member (20, 21); and a detection means (100, 200, 300) that is attached to the stationary member (10, 11, 13), the rotating member (40), or the frame (500), and detects whether or not the final molding product (600) is present between the stationary member (10, 11, 13) and the rotating member (40).

## Description

### BACKGROUND OF THE INVENTION

### Field of the Invention

The present invention relates to an injection blow molding machine.

### Description of Related Art

For example, an apparatus described in Japanese Unexamined Patent Publication No. 2000-127236 has an injection unit, an injection mold unit, a removal unit, a transfer unit, a temperature adjustment transport unit, a delivery unit, a blow molding transport unit, a blow molding mold unit, and a container removal unit. In addition, the apparatus described in Japanese Unexamined Patent Publication No. 2000-127236 further includes a control unit that controls one-cycle operation in each operation unit in accordance with a normal operation program and an end program for stopping the apparatus when an abnormality is detected, and an abnormality detection sensor provided in each operation unit. The control unit sequentially stops and controls each of the operation units after the temperature adjustment transport unit each time the processing operation of the remaining preform is completed when the abnormality is detected.

For example, an injection blow molding machine described in Japanese Patent No. 4283181 has a stationary platen fixed to a support frame, a movable platen slidably attached to a guide member on the support frame, and an intermediate mold support frame slidably attached to the guide member between the stationary platen and the movable platen. The injection blow molding machine described in Japanese Patent No. 4283181 is an apparatus that performs a process of molding a preform as an intermediate molding product having a test tube shape by injection molding and a process of molding the preform into a final molding product by blow molding. In addition, in the injection blow molding machine described in Japanese Patent No. 4283181, injection molding is performed at an injection station between the stationary platen and the intermediate mold support frame, and blow molding is performed at a blow station between the movable platen and the intermediate mold support frame.

The intermediate mold support frame of the injection blow molding machine described in Japanese Patent No. 4283181 has a substantially gate shape, and includes left and right leg portions that are slidably attached to the guide member at lower end portions and extend in a vertical direction, and a top plate portion that extends in a lateral direction to connect upper end portions of the leg portions. The core mold frame is disposed between the left and right leg portions. The core mold frame is fixed to a cylindrical support column attached to penetrate the left and right leg portions. That is, the core mold frame is non-rotatably attached to the intermediate mold support frame. A rotating frame serving as a gripping frame is rotatably attached to both left and right outer sides of the intermediate mold support frame in the support column. A columnar guide bar extending forward and rearward is attached to side surfaces of the rotating frame on a front side and a rear side. A gripping frame that supports a molding product gripping device for gripping an outer periphery of an opening portion of the preform as the intermediate molding product is attached on the guide bar to be slidable in an axial direction of the guide bar and to be lockable to and openable at a tip part of the guide bar. The molding product gripping device is attached to the gripping frame. The molding product gripping device has a screw split mold as an opening portion split mold and a slide plate to which the screw split mold is attached.

At the injection station, each male mold portion enters each female mold portion attached to the stationary mold. In addition, in the screw split mold in which half-split portions are coupled to each other, the screw split mold is pinched between the female mold portion and an injection core mold in a state in which the screw split mold is fitted to a portion near an inlet of the female mold portion. Accordingly, a cavity is formed between the female mold portion and an inner surface of the screw split mold, and an outer surface of the male mold portion, and resin is filled in the cavity to form the preform.

In addition, at the blow station, the screw split mold gripping the preform is pressed against an opening portion of a blow molding female mold. Therefore, a flange portion of the preform is pressed against an outer surface of the opening portion of the blow molding female mold, and a portion of the preform beyond the flange portion enters the blow molding female mold. In this state, high-pressure air is blown into the inside of the preform to expand the preform and press the preform against the inner surface of the blow molding female mold. Accordingly, it is possible to mold a final molding product having a vial shape or a bottle shape with the shape of the inner surface of the blow molding female mold. The final molding product naturally falls when the screw split mold is split and the gripping of the opening portion of the final molding product is released.

An electric motor as a drive source for rotating the rotating frame is attached to one leg portion of the intermediate mold support frame. Then, the electric motor is operated to rotate the rotating frame around the support column. Accordingly, the gripping frame with which the screw split mold has gripped the preform moves from the injection station to the blow station, and the other gripping frame moves from the blow station to the injection station.

### SUMMARY OF THE INVENTION

In the injection blow molding machine described in Japanese Patent No. 4283181, the gripping frame that has gripped the preform with the screw split mold moves from the injection station to the blow station, and the other gripping frame moves from the blow station to the injection station. Therefore, in a case where the screw split mold is still gripping the final molding product at the blow station, the final molding product moves from the blow station to the injection station together with the gripping frame. Then, when the intermediate mold support frame moves toward the stationary mold to perform the injection molding at the injection station, the final molding product is pinched between a stationary member such as the female mold portion attached to the stationary mold and a rotating member such as the screw split mold. As a result, there is a possibility that the stationary member or the rotating member may be damaged.

An object of the present invention is to provide an injection blow molding machine capable of suppressing damage to a stationary member or a rotating member caused by a final molding product being pinched between the stationary member and the rotating member.

The present invention that has been completed under such an object is an injection blow molding machine including: a stationary member that is fixed to a frame; a movable member that is movable with respect to the stationary member; a rotating member that is disposed between the stationary member and the movable member, rotates to face the movable member while gripping a preform after the preform is molded together with the stationary member, and rotates to face the stationary member after a final molding product is molded together with the movable member; and a detection means that is attached to the stationary member, the rotating member, or the frame, and detects whether or not the final molding product is present between the stationary member and the rotating member.

Here, the detection means may be attached to an upper portion of the stationary member.

In addition, a plurality of the preforms and a plurality of the final molding products may be molded side by side in an up-down direction, and the detection means may perform detection in the up-down direction.

In addition, the detection means may be a laser sensor that emits a laser beam downward or an ultrasonic sensor that transmits an ultrasonic wave downward.

From another viewpoint, the present invention is an injection blow molding machine including: a stationary member that is fixed to a frame; a movable member that is movable with respect to the stationary member; a rotating member that is disposed between the stationary member and the movable member, rotates to face the movable member while gripping a preform after the preform is molded together with the stationary member, and rotates to face the stationary member after a final molding product is molded together with the movable member; and a detection means that is attached to the movable member or the rotating member, and detects whether or not the final molding product is present between the movable member and the rotating member.

Here, the detection means may be attached to an upper portion of the movable member.

In addition, the detection means may include a camera that images a space between the movable member and the rotating member.

In addition, a plurality of the preforms and a plurality of the final molding products may be molded side by side in an up-down direction, and the detection means may perform detection in the up-down direction.

In addition, the detection means may be an ultrasonic sensor that transmits an ultrasonic wave downward or a laser sensor that emits a laser beam downward.

In addition, from another viewpoint, the present invention is an injection blow molding machine including: a stationary member that is fixed to a frame; a movable member that is movable with respect to the stationary member; and a rotating member that is disposed between the stationary member and the movable member, rotates to face the movable member while gripping a preform after the preform is molded together with the stationary member, and rotates to face the stationary member after a final molding product is molded together with the movable member. A plurality of the preforms and a plurality of the final molding products are molded side by side in an up-down direction, and are molded side by side in a perpendicular direction perpendicular to a movement direction of the movable member with respect to the stationary member and the up-down direction. The injection blow molding machine further includes a detection means for performing detection in a direction having a larger number out of the number of rows in the up-down direction or the number of rows in the perpendicular direction.

Here, the number of rows in the up-down direction may be larger than the number of rows in the perpendicular direction, and the detection means may be an ultrasonic sensor that transmits an ultrasonic wave downward or a laser sensor that emits a laser beam downward.

In addition, the detection means may be attached to at least any of an upper portion of the stationary member and an upper portion of the movable member.

According to the present invention, it is possible to suppress the damage to the stationary member or the rotating member caused by the final molding product being pinched between the stationary member and the rotating member.

### BRIEF DESCRIPTION OF THE DRAWINGS

FIG. 1 is a view showing an example of a cross section of an injection blow molding machine according to a first embodiment as viewed in an up-down direction.
FIG. 2 is a view of an example of a cross section of the injection blow molding machine according to the first embodiment as viewed in a second direction.
FIG. 3A is a view showing an example of a cross section before a final molding product is molded. FIG. 3B is a view showing an example of a cross section after the final molding product is molded.
FIG. 4 is an example of a view of the injection blow molding machine as viewed in the direction of an IV portion in FIG. 2.
FIG. 5 is an example of a view when a sensor detects that the final molding product is present between a cavity plate and an intermediate mold.
FIG. 6 is an example of a view of an injection blow molding machine according to a second embodiment as viewed in the direction of a VI portion in FIG. 2.
FIG. 7 is an example of a view when the sensor detects that a final molding product is present between a movable mold and the intermediate mold.
FIG. 8 is an example of a view showing a modification example of the sensor.
FIG. 9 is an example of a view of an injection blow molding machine according to a third embodiment as viewed in the direction of the VI portion in FIG. 2.
FIG. 10 is an example of a view when the sensor detects that a final molding product is present between a drive-side movable portion and a driven-side movable portion.

### DETAILED DESCRIPTION OF THE INVENTION

Hereinafter, embodiments of the present invention will be described in detail with reference to the accompanying drawings.

### <First Embodiment>

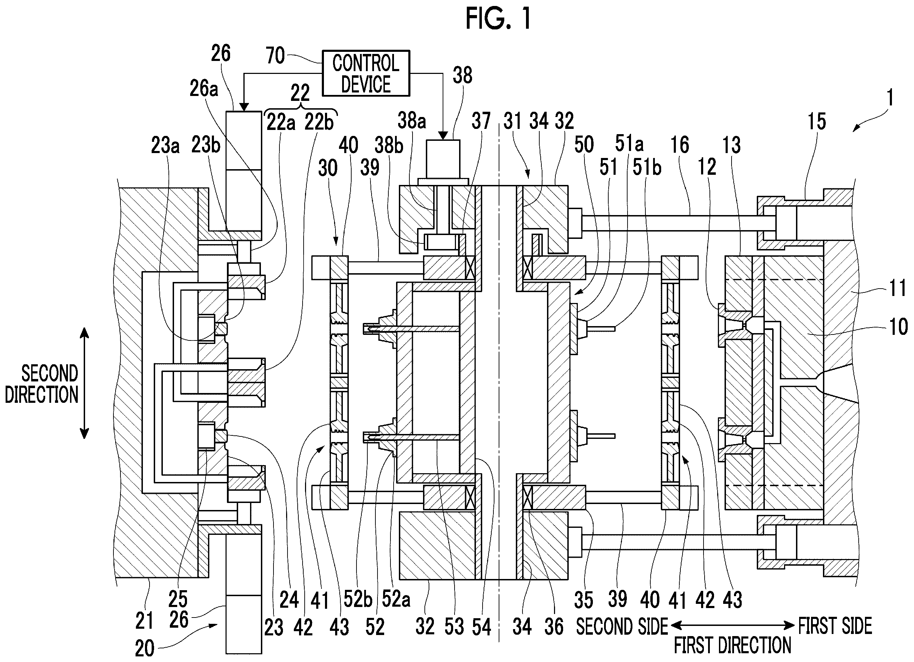

FIG. 1 is a view of an example of a cross section of an injection blow molding machine 1 according to a first embodiment as viewed in an up-down direction.

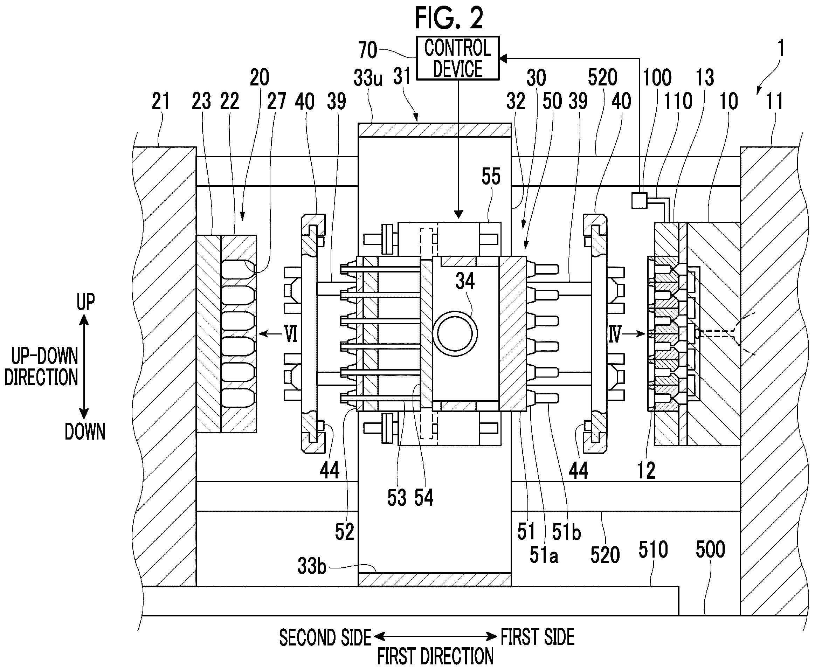

FIG. 2 is a view of an example of a cross section of the injection blow molding machine 1 according to the first embodiment as viewed in a second direction.

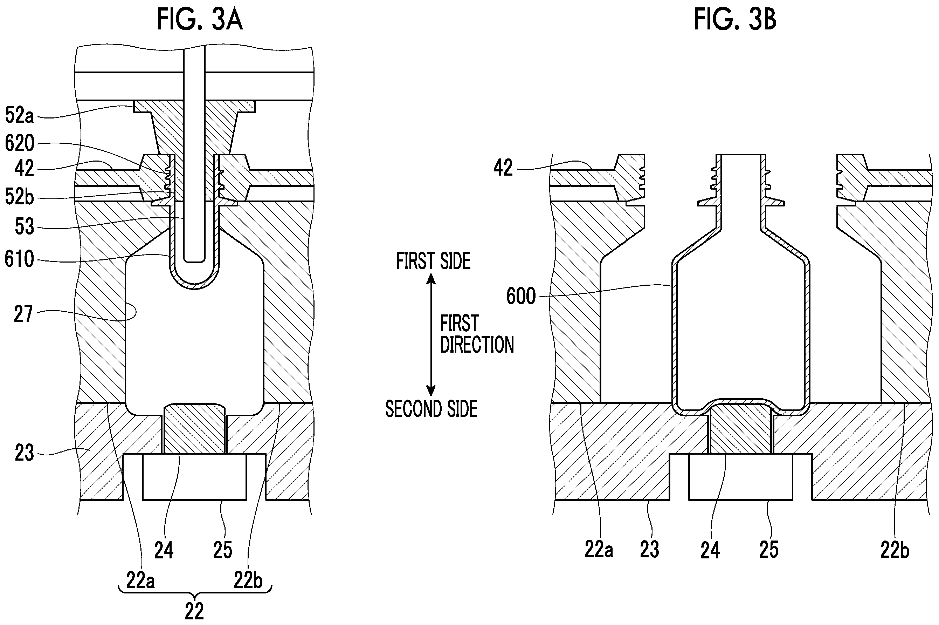

FIG. 3A is a view showing an example of a cross section before a final molding product 600 is molded. FIG. 3B is a view showing an example of a cross section after the final molding product 600 is molded.

FIGS. 1 and 2 show a state in which a stationary mold 10 and an injection core mold 51 are open resulting in a mold opening state. In addition, FIGS. 1, 2, and 3B show a state in which a drive-side movable portion 22a and a driven-side movable portion 22b of a movable blow split mold 22 are open, and the movable blow split mold 22 and a blow guide 52 are open, resulting in a mold opening state.

The injection blow molding machine 1 is an apparatus that performs injection molding and blow molding. The injection blow molding machine 1 molds, by the injection molding, a preform 610 having, for example, a test tube shape, which is an intermediate molding product, and molds a final molding product 600 such as a container by blowing high-pressure air into the inside of the preform 610 to expand the preform 610 by the blow molding.

The injection blow molding machine 1 includes the stationary mold 10, a movable mold 20 that is movable with respect to the stationary mold 10, and an intermediate mold 30 that is disposed between the stationary mold 10 and the movable mold 20. The injection blow molding machine 1 performs the injection molding at an injection station between the stationary mold 10 and the intermediate mold 30 by mold-closing the stationary mold 10 and the intermediate mold 30. In addition, the injection blow molding machine 1 performs the blow molding at a blow station between the intermediate mold 30 and the movable mold 20 by mold-closing the intermediate mold 30 and the movable mold 20. Hereinafter, the movement direction (in other words, a left-right direction in FIGS. 1 and 2) of the movable mold 20 with respect to the stationary mold 10 may be referred to as a "first direction". In addition, in the first direction, there is a case where a side where the stationary mold 10 is disposed is referred to as a "first side" and a side where the movable mold 20 is disposed is referred to as a "second side". In addition, the injection blow molding machine 1 is disposed such that the up-down direction in FIG. 2 is a vertical direction. Hereinafter, the up-down direction in FIG. 2 may be simply referred to as an "up-down direction". In addition, a direction (in other words, the up-down direction in FIG. 1) perpendicular to the first direction and the up-down direction may be referred to as a "second direction".

The injection blow molding machine 1 includes a stationary platen 11 fixed to a frame 500 fixed to a floor to hold the stationary mold 10, and a movable platen 21 slidably attached to a guide member 510 on the frame 500 to hold the movable mold 20. In addition, the injection blow molding machine 1 includes an intermediate mold support frame 31 that supports the intermediate mold 30 and is slidably attached to a guide member 510 between the stationary platen 11 and the movable platen 21.

In addition, the injection blow molding machine 1 includes an injection device (not shown) that injects resin into a cavity formed between the stationary mold 10 and the intermediate mold 30 on a side opposite to the stationary mold 10 with respect to the stationary platen 11.

In addition, the injection blow molding machine 1 includes a mold clamping device (not shown) on a side opposite to the movable mold 20 with respect to the movable platen 21. The mold clamping device has a mold clamping cylinder device (not shown) for driving the movable platen 21 and a support plate (not shown) to which the mold clamping cylinder device is attached. The support plate and the stationary platen 11 are connected to each other by a plurality (for example, four) of tie bars 520.

The stationary platen 11 is fixed to the frame 500 by bolts or the like. The movable platen 21 and the intermediate mold support frame 31 are mainly supported from below by the guide member 510 and move in the first direction along the tie bars 520.

In addition, the injection blow molding machine 1 includes a cavity plate 13 having a plurality of female mold portions 12. In the present embodiment, a total of twelve female mold portions 12 are provided to form two rows each having six female mold portions 12 arranged in the up-down direction, and the cavity plate 13 having the twelve female mold portions 12 is attached to the stationary mold 10.

In addition, a sensor 100 that detects whether or not the final molding product 600 is present between the stationary mold 10 and the cavity plate 13 is attached to the cavity plate 13. The sensor 100 will be described in detail below.

The movable mold 20 has the movable blow split mold 22, a first bottom mold 23, a second bottom mold 24, and a suction device 25 that suctions the final molding product 600.

The movable blow split mold 22 has the drive-side movable portion 22a and the driven-side movable portion 22b that are disposed to face each other. The drive-side movable portion 22a and the driven-side movable portion 22b are moved in the second direction by a split mold driving cylinder device 26 to be brought into close contact with each other or to be separated from each other. A blow molding female mold 27 is formed by bringing the drive-side movable portion 22a and the driven-side movable portion 22b into close contact with each other. In the present embodiment, the blow molding female molds 27 is formed by arranging six sets of the drive-side movable portion 22a and the driven-side movable portion 22b arranged in the up-down direction, and two sets of the drive-side movable portions 22a and the driven-side movable portions 22b are disposed side by side in the second direction. The drive-side movable portion 22a is connected to a piston rod 26a of the split mold driving cylinder device 26, and is directly moved by the split mold driving cylinder device 26. The driven-side movable portion 22b is connected to the drive-side movable portion 22a of another set, and is moved in the second direction to come into contact with or separate from the drive-side movable portion 22a of its own set. For example, the split mold driving cylinder device 26 can be exemplified as a pneumatic cylinder device.

The first bottom mold 23 is attached to the movable platen 21. A through-hole 23a penetrating in the first direction is formed in the first bottom mold 23. The through-hole 23a is disposed on an extension line of the center line of the final molding product 600 in a state in which the drive-side movable portion 22a and the driven-side movable portion 22b are mold-closed, and forms a space in which the second bottom mold 24 can be disposed. A recessed portion 23b recessed from a contact surface of the first bottom mold 23 with the movable blow split mold 22 is formed around the through-hole 23a.

The second bottom mold 24 is a columnar member, and is disposed in the through-hole 23a of the first bottom mold 23. The second bottom mold 24 is disposed to slightly protrude from the recessed portion 23b of the first bottom mold 23 to the first side in the first direction. The diameter of the second bottom mold 24 is slightly smaller than the diameter of the through-hole 23a of the first bottom mold 23. Therefore, a gap is formed between the first bottom mold 23 and the second bottom mold 24 in a state in which the second bottom mold 24 is disposed in the through-hole 23a.

The suction device 25 is composed of a vacuum pump or the like, and suctions the final molding product 600. Specifically, the suction device 25 suctions the final molding product 600 by using a gap formed between the first bottom mold 23 and the second bottom mold 24 as a passage for air during suction.

The intermediate mold 30 has a rotating frame 35 that is rotatably attached to the intermediate mold support frame 31, and a core mold frame 50 that is non-rotatably attached to the intermediate mold support frame 31.

Here, the intermediate mold support frame 31 includes rectangular parallelepiped leg portions 32 that are disposed at both end portions in the second direction and are molded such that the up-down direction is a longitudinal direction and the first direction is a short direction, a top plate portion 33u that connects upper portions of the both leg portions 32, and a bottom portion 33b that connects lower portions of both the leg portions 32. A cylindrical support column 34 that is attached to penetrate the leg portion 32 in the second direction is fixed to a central portion of each of the leg portions 32 in the up-down direction. In addition, a through-hole (not shown) in the first direction through which the tie bar 520 passes is formed in the upper portion and the lower portion of each of the leg portions 32.

The rotating frame 35 is attached to the outer periphery of the support column 34 via a bearing member 36 such as a ball bearing, and is rotatable with respect to the intermediate mold support frame 31 with the center line of the support column 34 as a rotation center. In addition, in the present embodiment, an annular driven gear 37 is attached to a side surface of the rotating frame 35, and a drive gear 38b attached to a rotary shaft 38a of an electric motor 38 meshes with the driven gear 37. Accordingly, the rotating frame 35 rotates around the support column 34 by the operation of the electric motor 38.

The intermediate mold 30 has a plurality of guide bars 39 attached to the rotating frame 35 to extend in the first direction, and a gripping frame 40 attached to the guide bars 39 to be slidable in the first direction. In the present embodiment, the intermediate mold 30 has one guide bar 39 at each of an upper portion and a lower portion, which is each of both end portions in the second direction, at a first-side end portion of the rotating frame 35 in the mold opening state shown in FIGS. 1 and 2. In addition, a second-side end portion of the rotating frame 35 has one guide bar 39 at the upper portion and the lower portion, which is each of both end portions in the second direction. That is, the intermediate mold 30 according to the present embodiment has a total of eight guide bars 39. However, the intermediate mold 30 may have four guide bars extending to both sides of the stationary mold 10 side and the movable mold 20 side at each of the upper portion and the lower portion, which is each of both end portions in the second direction.

In the state shown in FIGS. 1 and 2, one gripping frame 40 is provided at each of both end portions of the rotating frame 35 in the first direction. The gripping frame 40 is slidably attached to the four guide bars 39 provided on the same side with respect to the center line of the support column 34.

The gripping frame 40 has a gripping device 41 that molds or grips an opening portion 620 of the final molding product 600. The gripping device 41 has a screw split mold 42 that molds or grips the opening portion 620, a slide plate 43 to which the screw split mold 42 is attached, and a gripping release member 44 that releases the gripping of the opening portion 620. The gripping release member 44 is driven by a gripping release driving device (not shown). The screw split mold 42 molds the opening portion 620 in a mold closed state during the injection molding and grips the opening portion 620 in the mold closed state during the blow molding. In addition, the screw split mold 42 releases the opening portion 620 by performing mold opening after the blow molding is completed.

More specifically, the screw split mold 42 has a configuration that can be split in the second direction, and each half-split portion of the screw split mold 42 is attached to each half-split portion of the slide plate 43. In addition, the half-split portion of the slide plate 43 is attached to the gripping frame 40 to be slidable in the second direction. The gripping release member 44 includes a configuration that can be split in the second direction, and each of the half-split portions of the gripping release members 44 is attached to the half-split portion of the slide plate 43. When the gripping release member 44 is pushed apart in the second direction, the half-split portions of the slide plate 43 and the half-split portions of the screw split mold 42 are also pushed apart in the second direction and split. Accordingly, at the blow station, the gripping of the opening portion 620 of the final molding product 600 is released after the blow molding is completed.

In the present embodiment, the screw split mold 42 is provided at a position corresponding to the female mold portion 12 and the blow molding female mold 27 of the movable blow split mold 22, which are attached to the stationary mold 10. That is, the screw split molds 42 form two rows each having six screw split molds arranged in the up-down direction in the state shown in FIGS. 1 and 2.

The core mold frame 50 is fixed to the support column 34, and is non-rotatably attached to the intermediate mold support frame 31.

An injection core mold 51 is attached to a surface of the core mold frame 50 on the stationary platen 11 side, and a blow guide 52 is attached to a surface of the core mold frame 50 on the movable platen 21 side.

The injection core mold 51 has a base portion 51a and a male mold portion 51b, and forms a cavity having the shape of the preform 610 between the injection core mold 51 and the female mold portion 12 in the mold closed state.

The blow guide 52 includes a base portion 52a, and forms a blow molding space having a shape of the final molding product 600 in the mold closed state by being brought into close contact with an inlet of the blow molding female mold 27 formed by the drive-side movable portion 22a and the driven-side movable portion 22b being brought into close contact with each other.

In addition, the intermediate mold 30 has a stretching rod 53 that can protrude from a base portion 52a of the blow guide 52, a connecting plate 54 to which base portions of a plurality of the stretching rods 53 are attached, and a stretching rod driving device 55 for protruding the stretching rod 53. For example, the stretching rod driving device 55 can be exemplified as a pneumatic cylinder device. For example, the stretching rod driving device 55 can be exemplified as being attached to an outer surface of an upper portion and an outer surface of a lower portion of the core mold frame 50. The connecting plate 54 is connected to a piston rod of the stretching rod driving device 55. When the stretching rod driving device 55 operates, the connecting plate 54 connected to the piston rod moves, and the stretching rod 53 protrudes into the preform 610. In the present embodiment, the final molding product 600 is molded from the preform 610 by stretching blow molding in which blow molding is performed by protruding the stretching rod 53 into the preform 610 and blowing high-pressure air into the preform 610 while the preform 610 is stretched.

In addition, the injection blow molding machine 1 includes an intermediate mold driving cylinder device 15 that moves the intermediate mold support frame 31 in the first direction with respect to the stationary platen 11, and a connecting rod 16 connected to a piston rod of the intermediate mold driving cylinder device 15. The intermediate mold driving cylinder device 15 is fixed to the stationary platen 11, and the connecting rod 16 is attached to the intermediate mold support frame 31. The intermediate mold driving cylinder device 15 is operated to move the intermediate mold support frame 31 with respect to the stationary platen 11. Accordingly, the injection blow molding machine 1 can perform the injection molding and the blow molding by performing the mold closing, the mold clamping, and the mold opening at separate timings at the injection station and the blow station.

In addition, the injection blow molding machine 1 has a control device 70 that controls the injection blow molding machine 1. The control device 70 includes a central processing unit (CPU) (not shown), a read only memory (ROM) (not shown) that is a storage area for storing a program, and a random access memory (RAM) (not shown) that is an execution area of the program. The control device 70 realizes various functions by causing the CPU to execute a program stored in a ROM or a storage device such as a hard disk drive (HDD) or a semiconductor memory. In addition, the control device 70 controls the operation of the sensor 100, and detection results from various sensors such as the sensor 100 is input to the control device 70. The control device 70 controls the operations of the injection device (not shown), a mold clamping device (not shown), the intermediate mold driving cylinder device 15, the electric motor 38, the gripping release driving device (not shown), the stretching rod driving device 55, and the like, based on the detection results from the various sensors. Hereinafter, the operation of the injection blow molding machine 1 performed based on the control by the control device 70 will be described.

### (Operation)

The injection blow molding machine 1 according to the present embodiment molds twelve preforms 610 equal to the number the female mold portions 12 by the injection molding at the injection station in one molding cycle. In addition, the injection blow molding machine 1 performs, at the blow station, the blow molding by using the number of preforms 610 molded at the injection station in the previous molding cycle, and molds twelve final molding products 600.

First, the mold clamping device (not shown) operates from a state in which the mold opening is performed at the injection station and the blow station shown in FIGS. 1 and 2, and the mold closing is started. Accordingly, the movable platen 21 moves from the mold opening state to the mold closed state, that is, moves to approach the stationary platen 11. Then, while the movable platen 21 moves from the mold opening state to the mold closed state, the intermediate mold driving cylinder device 15 operates, and the intermediate mold support frame 31 moves from the mold opening state to the mold closed state, that is, moves to approach the stationary platen 11.

Before the movable platen 21 moves from the mold opening state to the mold closed state, the split mold driving cylinder device 26 operates to move and close the drive-side movable portion 22a and the driven-side movable portion 22b in the second direction to form the blow molding female mold 27.

Then, when the movable platen 21 is in the mold closed state, the mold closing is completed at the injection station and the blow station. In this case, the gripping frame 40 at the injection station and the blow station is in contact with the core mold frame 50.

In this case, at the injection station, each of the male mold portions 51b enters each of the female mold portions 12 attached to the stationary mold 10. In addition, a cavity is formed between the inner surfaces of the female mold portion 12 and the screw split mold 42 and an outer surface of the male mold portion 51b. Then, the resin injected by the injection device is filled in the cavity. Even after the filling of the resin is completed, the mold closed state continues, and the resin in the cavity is cooled.

In addition, at the blow station, as shown in FIG. 3A, the screw split mold 42 gripping the opening portion 620 of the preform 610 is pressed against the opening portion of the blow molding female mold 27 formed by the drive-side movable portion 22a and the driven-side movable portion 22b. Accordingly, the flange portion of the preform 610 is pressed against an outer surface of the opening portion of the blow molding female mold 27, and a portion of the preform 610 beyond the flange portion enters the blow molding female mold 27. In addition, a tip part 52b of the base portion 52a of the blow guide 52 enters the opening portion 620 of the preform 610. Then, the stretching rod driving device 55 operates, and the stretching rod 53 protrudes toward the deep side of the blow molding female mold 27. At the same time, high-pressure air is blown into the inside of the preform 610, so that the preform 610 is expanded and pressed against an inner surface of the blow molding female mold 27. Accordingly, as shown in FIG. 3B, a vial-shaped or bottle-shaped bottomed container having a shape of the inner surface of the blow molding female mold 27 is molded as the final molding product 600. When the stretching is completed, the stretching rod 53 is returned to its original position from the protruding state. Then, when the blow molding is completed, a mold clamping force applied to the movable platen 21 by the mold clamping device is released.

Thereafter, the movable platen 21 moves in a direction away from the core mold frame 50 while maintaining a positional relationship between the drive-side movable portion 22a and the driven-side movable portion 22b, and the gripping device 41. Then, when a predetermined gap is formed between the screw split mold 42 and the blow guide 52, the drive-side movable portion 22a and the driven-side movable portion 22b move in the second direction. In addition, the screw split mold 42 is pushed apart and opened in the second direction, thereby releasing the opening portion 620. Then, when the spacing between the drive-side movable portion 22a and the driven-side movable portion 22b is at least larger than the outer diameter of the final molding product 600, the final molding product 600 falls downward from between the drive-side movable portion 22a and the driven-side movable portion 22b. The final molding product 600 is discharged below the injection blow molding machine 1 and is housed in a housing device (not shown).

Thereafter, the intermediate mold driving cylinder device 15 operates, and the intermediate mold support frame 31 moves from the mold closed state to the mold opening state, that is, moves away from the stationary platen 11. Since the core mold frame 50 also moves together with the intermediate mold support frame 31, the male mold portion 51b is removed from the female mold portion 12 attached to the stationary mold 10. Subsequently, when the intermediate mold support frame 31 further moves away from the stationary platen 11, the gripping frame 40 also moves together. Thus, the screw split mold 42 is removed from the female mold portion 12. In this case, since the half-split portions of the screw split mold 42 are biased in the center direction by a biasing member and are coupled to each other, the opening portion 620 of the preform 610 is gripped.

Accordingly, the gripping frame 40 at the injection station reaches a position away from the stationary mold 10 in a state in which the screw split mold 42 has gripped all the twelve preforms 610.

Subsequently, the electric motor 38 operates, and the rotating frame 35 is rotated about the center line of the support column 34. Accordingly, the gripping frame 40 in which the screw split mold 42 has gripped the preform 610 moves from the injection station to the blow station, and the other gripping frame 40 moves from the blow station to the injection station.

Then, when the rotation of the rotating frame 35 is completed, the mold opening is performed at the injection station and the blow station. Accordingly, one molding cycle is completed. Thereafter, the above-described operation is repeated and executed, and a predetermined number of molding cycles are repeated.

However, in a case where the sensor 100 detects the final molding product 600 is present between the stationary mold 10 and the intermediate mold 30, the control device 70 stops all operations of the injection blow molding machine 1 such as the operation of the mold clamping device or the operation of the intermediate mold driving cylinder device. This is because when the mold closing is performed in a state in which the gripping device 41 of the intermediate mold 30 has gripped the final molding product 600, adverse effects occur due to the fact that the final molding product 600 is crushed by the final molding product 600 being pinched between the intermediate mold 30 and the cavity plate 13 or the like. Examples of the adverse effects include damage to the female mold portion 12, the intermediate mold 30, or the like, and resin being filled in a state in which the crushed final molding product 600 has entered the female mold portion 12, resulting in overfilling of the resin.

Therefore, in the injection blow molding machine 1, when the sensor 100 is provided and the sensor 100 detects that the final molding product 600 is present between the cavity plate 13 and the intermediate mold 30 before the mold closing is performed, the control device 70 stops all operations of the injection blow molding machine 1.

Hereinafter, the sensor 100 will be described in detail.

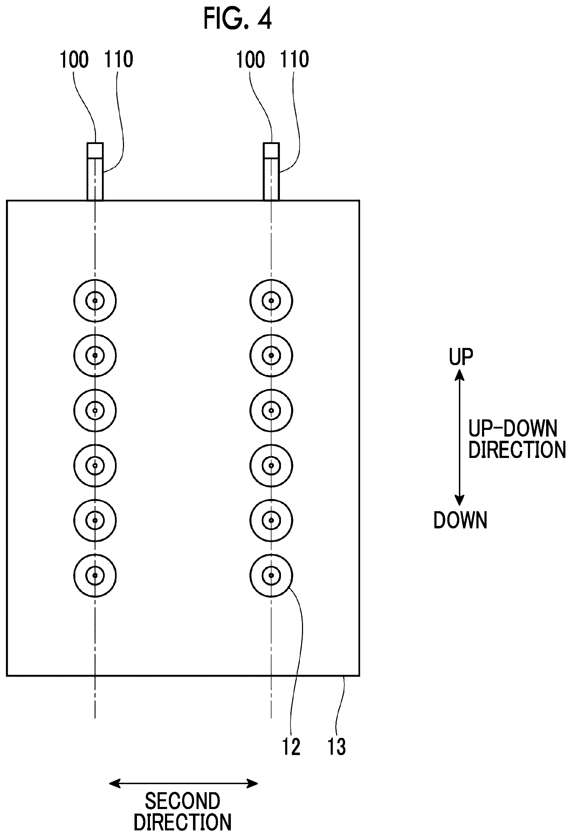

FIG. 4 is an example of a view of the injection blow molding machine 1 in the direction of an IV portion in FIG. 2.

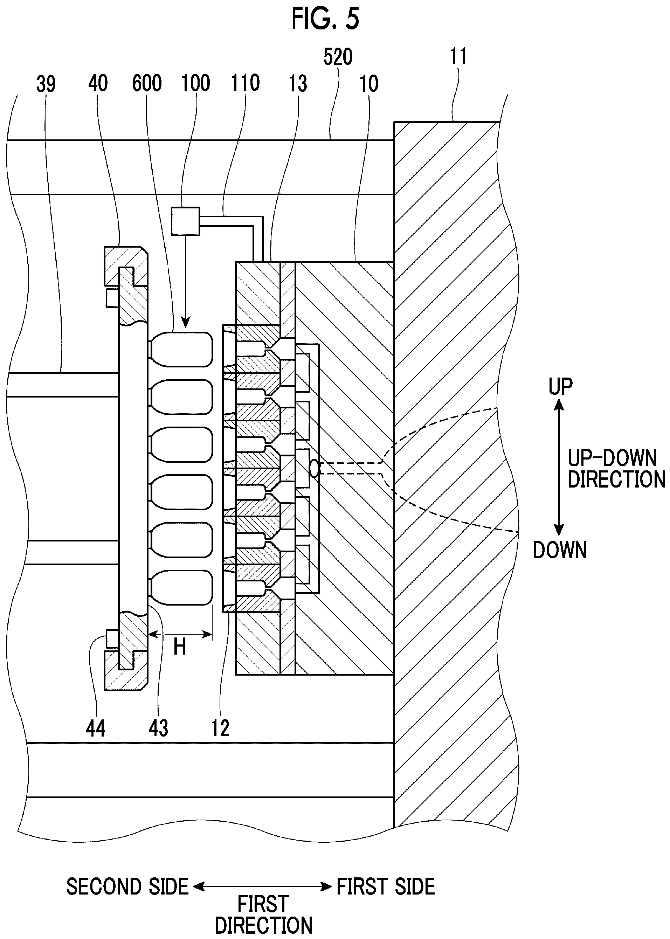

FIG. 5 is an example of a view when the sensor 100 detects that the final molding product 600 is present between the cavity plate 13 and the intermediate mold 30.

The sensor 100 is a laser sensor capable of calculating a distance to an object through light emission and light reception of a laser beam. The sensor 100 is attached to an upper portion of the cavity plate 13 to emit a laser beam downward so that the sensor 100 can detect that the final molding product 600 is present between the cavity plate 13 and the intermediate mold 30 before the mold closing is performed. The sensor 100 may be attached such that a laser beam can be downward emitted such that the position thereof in the first direction is at a distance of less than the height H of the final molding product 600 in a first-side direction from a first-side end surface of the gripping frame 40 facing the cavity plate 13 in the mold opening state (refer to FIG. 5). That is, the sensor 100 may be attached such that the laser beam emitted downward hits the final molding product 600 and such that the light returning after the hitting can be received. In addition, as shown in FIG. 4, the sensor 100 is provided such that the position thereof in the up-down direction is above an upper surface of the cavity plate 13.

In addition, two sensors 100 are provided in the second direction. In the present embodiment, a total of twelve female mold portions 12 are provided to form two rows each having six female mold portions 12 arranged in the up-down direction. Thus, as shown in FIG. 4, one sensor 100 is provided above each of the two rows. This is because the laser beam emitted by the laser sensor has straightness, and thus, the final molding product 600 present in each of the two rows is detected with high accuracy.

The method of attaching the sensor 100 to the upper portion of the cavity plate 13 is not particularly limited. For example, as shown in FIG. 5, the sensor 100 can be exemplified as being attached to a tip part of an arm 110 fixed to the upper surface of the cavity plate 13 by a fastening member such as a bolt or a screw. As shown in FIG. 4, one sensor 100 may be attached to the tip part of one arm 110, or two sensors 100 may be attached to the tip part of one arm 110.

According to the sensor 100 configured as described above, it is possible to detect that the final molding product 600 is present between the stationary mold 10 and the intermediate mold 30 before the mold closing is performed by using the time until the laser beam is emitted and the light returned after hitting the final molding product 600 is received. Since the laser beam has straightness, the final molding product 600 can be detected by one sensor 100 at any position in the same row.

In the above-described embodiment, the base of the arm 110 having the sensor 100 attached to the tip part thereof is fixed to the cavity plate 13. However, a position for fixing the base of the arm 110 is not particularly limited. For example, the base of the arm 110 may be attached to the stationary mold 10, or may be attached to the stationary platen 11. In addition, the base of the arm 110 may be attached to the frame 500. In addition, the base of the arm 110 may be attached to the intermediate mold support frame 31 or the intermediate mold 30.

In addition, the sensor 100 may be disposed to be able to detect that the final molding product 600 is present between the stationary mold 10 and the intermediate mold 30 before the mold closing is performed by emitting the laser beam upward from below the cavity plate 13. For example, the base of the arm 110 having the sensor 100 attached to the tip part thereof may be fixed to at least any one of the cavity plate 13, the stationary mold 10, the stationary platen 11, or the frame 500. Alternatively, the base of the arm 110 may be attached to the intermediate mold support frame 31 or the intermediate mold 30. In a case where the base of the arm 110 is attached to the intermediate mold 30, the base may be attached to the rotating frame 35 or the gripping frame 40.

In addition, the sensor 100 is not limited to the laser sensor. The sensor 100 may be an ultrasonic sensor capable of calculating a distance to an object through transmission and reception of an ultrasonic wave. The ultrasonic sensor can detect that the final molding product 600 is present between the stationary mold 10 and the intermediate mold 30 before the mold closing is performed by using the time until the ultrasonic wave is transmitted and reflected waves returning after hitting the final molding product 600 is received. Even in a case where the sensor 100 is an ultrasonic sensor, the final molding product 600 can be detected by attaching the sensor 100 to the cavity plate 13 or the like by using the same method as in a case where the sensor 100 is the laser sensor.

In addition, the sensor 100 may have a camera, and may detect that the final molding product 600 is present between the stationary mold 10 and the intermediate mold 30 before the mold closing is performed by using an image captured by the camera. The sensor 100 can detect that the final molding product 600 is present by comparing the image captured by the camera with an image captured in advance and stored in the storage device. Alternatively, the image captured by the camera may be transmitted to the control device 70, and the control device 70 may compare the image transmitted from the camera with the image captured in advance and stored in the storage device to detect the presence of the final molding product 600.

In a case where the sensor 100 is of a camera type, a camera having a field of view capable of capturing the entire region between the stationary mold 10 and the intermediate mold 30 before the mold closing is performed is used, so that all the final molding product 600 at a total of twelve locations in two rows can be detected by one camera.

In addition, the sensor 100 may be provided outside an end surface of the cavity plate 13 in the second direction and may emit a laser beam in the second direction to detect that the final molding product 600 is present between the stationary mold 10 and the intermediate mold 30 before the mold closing is performed. In the case of this configuration, in consideration of the straightness of the laser beam, it is necessary to provide one sensor 100 at a position corresponding to each of six female mold portions 12 arranged in the up-down direction. Therefore, it is necessary to provide the six sensors 100. Even in this case, the base of the arm 110 having the sensor 100 attached at the tip part thereof may be attached to at least any of the cavity plate 13, the stationary mold 10, the stationary platen 11, the intermediate mold support frame 31, and the intermediate mold 30.

In addition, in such a configuration, the sensor 100 may be an ultrasonic sensor or may be a camera type having a camera.

As described above, the injection blow molding machine 1 includes an object (hereinafter, may be referred to as a "stationary member") composed of the cavity plate 13, the stationary mold 10, and the stationary platen 11 fixed to the frame 500. In addition, the injection blow molding machine 1 includes an object (hereinafter, may be referred to as a "movable member") composed of the movable mold 20 and the movable platen 21 that are movable with respect to the stationary member. In addition, the injection blow molding machine 1 includes the gripping frame 40 (an example of a rotating member) that is disposed between a stationary member and a movable member, rotates to face the movable member while gripping the preform after the preform 610 is molded together with the stationary member, molds the final molding product 600 together with the movable member, and then rotates to face the stationary member. In addition, the injection blow molding machine 1 includes the sensor 100 (an example of a detection means) attached to the stationary member, the gripping frame 40, or the frame 500 to detect whether or not the final molding product 600 is present between the stationary member and the gripping frame 40.

According to the injection blow molding machine 1 configured as described above, in a case where the sensor 100 detects that the final molding product 600 is present between the stationary member and the gripping frame 40, the control device 70 can stop the operation of the injection blow molding machine 1. As a result, it is possible to suppress the occurrence of the adverse effects on the injection blow molding machine 1 due to the fact that the final molding product 600 is crushed by the final molding product 600 being pinched between the intermediate mold 30 and the cavity plate 13.

In the above-described injection blow molding machine 1, the sensor 100 may be attached to an upper portion of the stationary member (at least any one of the cavity plate 13, the stationary mold 10, or the stationary platen 11). For example, in the above-described embodiment, the sensor 100 is attached to the upper portion of the cavity plate 13. For example, since a water pipe for cooling the stationary mold 10 or the like is close to the frame 500, the degree of freedom in selecting an attachment location is higher in a case where the sensor 100 is attached to the stationary member than in a case where the sensor 100 is attached to the frame 500.

In the injection blow molding machine 1 according to the present embodiment, six preforms 610 and six final molding products 600 are molded side by side in the up-down direction. Therefore, in a case where the sensor 100 is a laser sensor or an ultrasonic sensor, it is desirable to detect the preforms 610 and the final molding products 600 in the up-down direction. In the injection blow molding machine 1 according to the present embodiment, two preforms 610 and two final molding products 600 are molded side by side in the second direction. Therefore, the number of sensors 100 can be reduced compared to a case where the sensors 100 detect the preforms 610 and the final molding products 600 in the second direction.

That is, the injection blow molding machine 1 molds a plurality of the preforms 610 and the final molding products 600 side by side in the up-down direction, and molds a plurality of the preforms 610 and the final molding products 600 side by side in the second direction that is a perpendicular direction perpendicular to the movement direction (in other words, the first direction) of the movable member with respect to the stationary member and the up-down direction. Then, the injection blow molding machine 1 preferably includes the sensor 100 that performs detection in a direction having a larger number out of the number of rows in the up-down direction or the number of rows in the second direction. That is, in the injection blow molding machine 1 according to the present embodiment, it is preferable to include the sensor 100 that performs detection in the up-down direction having a larger number of six that is the number of rows in the up-down direction or two that is the number of rows in the second direction. This is because the number of the sensors 100 can be reduced compared to a configuration including the sensors 100 that perform detection in the second direction having a smaller number.

The sensor 100 may be a camera type having a camera, but the sensor 100 may be a laser sensor or an ultrasonic sensor in order to achieve cost reduction.

### <Second Embodiment>

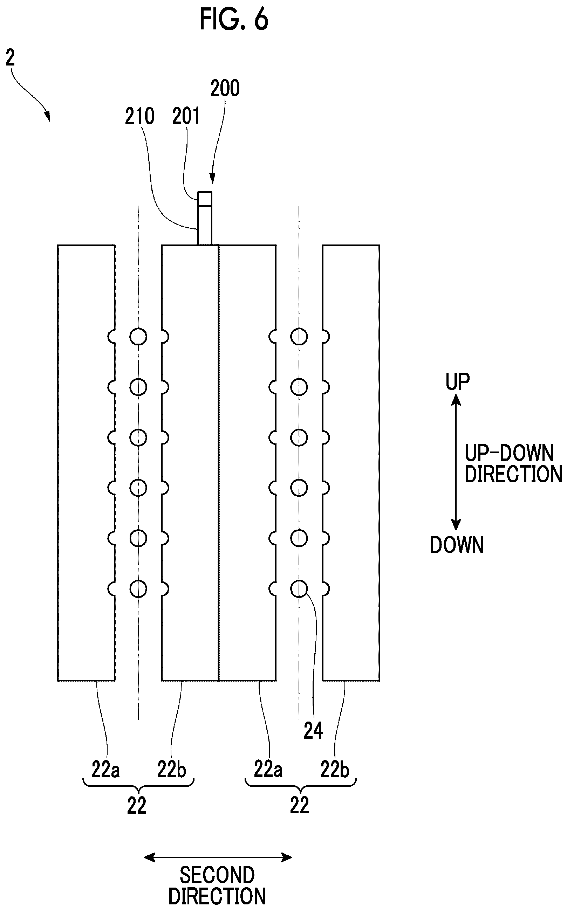

FIG. 6 is an example of a view of the injection blow molding machine 2 according to a second embodiment in the direction of a VI portion in FIG. 2.

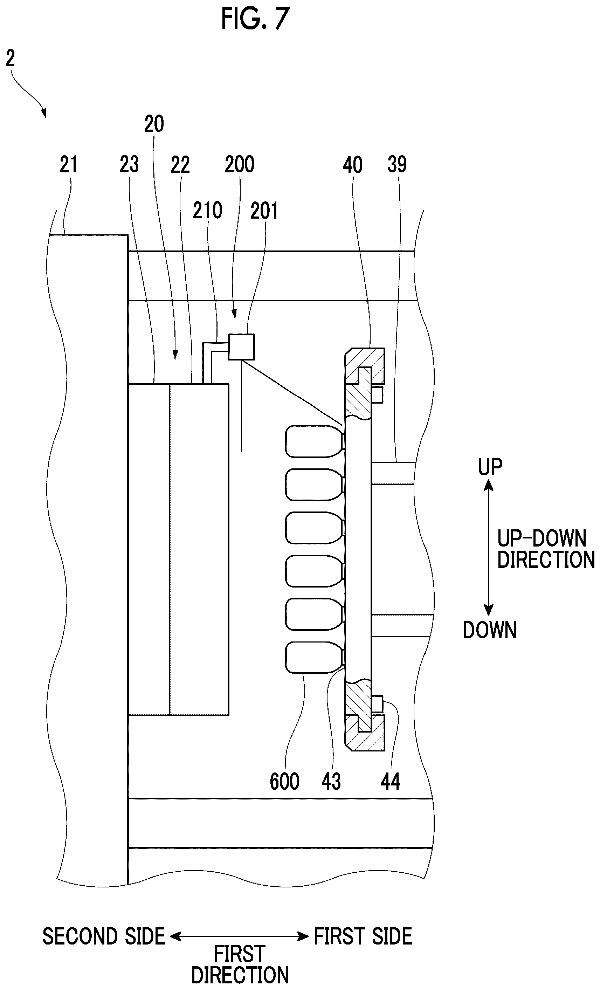

FIG. 7 is an example of a view when the sensor 200 detects that the final molding product 600 is present between the movable mold 20 and the intermediate mold 30.

The injection blow molding machine 2 according to the second embodiment is different from the injection blow molding machine 1 according to the first embodiment in that the presence of the final molding product 600 between the movable mold 20 and the intermediate mold 30 after the mold opening is performed is detected. Hereinafter, points different from the first embodiment will be described. The same reference numerals are used for the same components in the first embodiment and the second embodiment, and detailed descriptions thereof will be omitted.

For example, in a case where the gripping device 41 after the blow molding is performed keeps gripping the final molding product 600, there is a possibility that the final molding product 600 reaches between the stationary mold 10 and the intermediate mold 30 by the gripping frame 40 being rotated thereafter.

In the injection blow molding machine 2 according to the second embodiment, the injection blow molding machine 2 has a sensor 200 that detects that the final molding product 600 is located between the movable mold 20 and the intermediate mold 30 after the mold opening is performed before the final molding product 600 is rotated to be located between the stationary mold 10 and the intermediate mold 30. The sensor 200 includes a camera 201, and can be exemplified as detecting the presence of the final molding product 600 by comparing an image captured by the camera 201 with an image captured in advance and stored in the storage device. Alternatively, the image captured by the camera 201 may be transmitted to the control device 70, and the control device 70 may compare the image transmitted from the camera with the image captured in advance and stored in the storage device to detect the presence of the final molding product 600. In such a case, the sensor 200 is composed of the camera 201 and the control device 70.

Then, the camera 201 is attached above the movable mold 20, and can be exemplified as a camera having a field of view capable of imaging a portion on the movable mold 20 side in all the twelve gripping devices 41 of the intermediate mold 30 after the mold opening is performed.

By using the sensor 200 having the camera 201, one camera 201 attached to the movable platen 21 can detect that at least any of all the twelve gripping devices 41 of the intermediate mold 30 after the mold opening is performed is gripping the final molding product 600. In a case where the sensor 200 detects that the final molding product 600 is present between the movable mold 20 and the intermediate mold 30 after the mold opening is performed, the control device 70 stops all the operations, so that the final molding product 600 can be kept from reaching between the stationary mold 10 and the intermediate mold 30. As a result, damage to the stationary mold 10 or the intermediate mold 30 is suppressed.

In addition, the position or method for attaching the camera 201 to an upper portion of the movable mold 20 is not particularly limited. For example, as shown in FIG. 6, the camera 201 can be exemplified as being attached to a tip part of an arm 210 fixed to an upper surface of the driven-side movable portion 22b by a fastening member such as a bolt or a screw. In addition, as shown in FIG. 6, one camera 201 can be exemplified as being attached to a tip part of one arm 210.

In addition, a base of the arm 210 having the camera 201 attached to a tip part thereof is fixed to the movable mold 20. However, the position for fixing the base of the arm 210 is not particularly limited. For example, the base of the arm 210 may be attached to the movable platen 21. In addition, the base of the arm 210 may be attached to the frame 500. In addition, the base of the arm 210 may be attached to the intermediate mold support frame 31 or the intermediate mold 30.

In addition, the camera 201 may be attached to image the space between the movable mold 20 and the intermediate mold 30 from below, instead of being attached to image the space between the movable mold 20 and the intermediate mold 30 from above. In addition, the camera 201 may be attached to image the space between the movable mold 20 and the intermediate mold 30 in the second direction from the outside of an end portion of the intermediate mold 30 in the second direction.

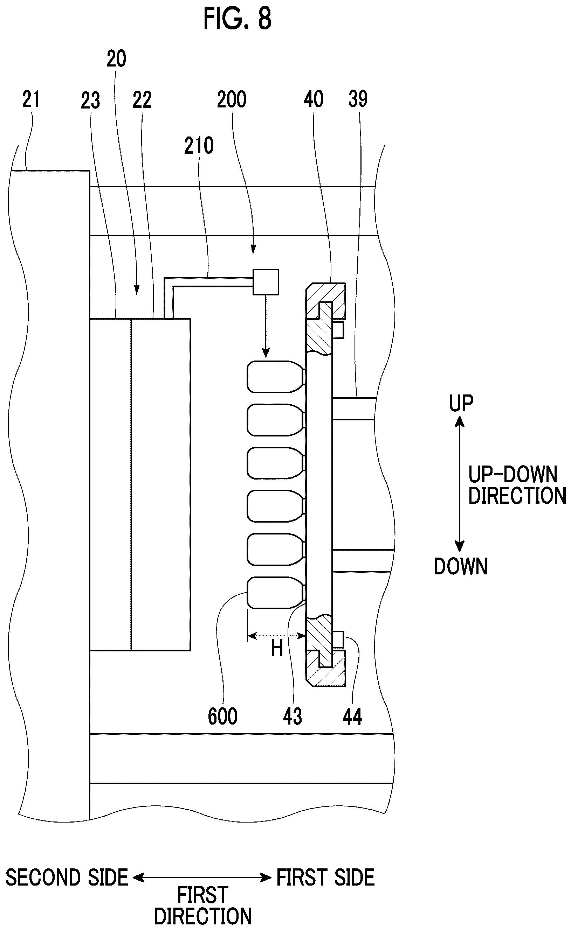

FIG. 8 is an example of a view showing a modification example of the sensor 200.

The sensor 200 may be a laser sensor or an ultrasonic sensor. In a case where the sensor 200 is a laser sensor, as shown in FIG. 8, the sensor 200 may be attached such that a laser beam can be downward emitted at a distance of less than the height H of the final molding product 600 in a second-side direction from a second-side end surface of the gripping frame 40 facing the movable mold 20 in the mold opening state. This is because the laser beam has straightness. Similarly, in a case where the sensor 200 is an ultrasonic sensor, the sensor 200 may be attached such that an ultrasonic wave can be downward emitted at a distance of less than the height H of the final molding product 600 in the second-side direction from the second-side end surface of the gripping frame 40 facing the movable mold 20 in the mold opening state.

In addition, in a case where the sensor 200 is a laser sensor or an ultrasonic sensor, for example, the base of the arm 210 having the sensor 200 attached to the tip part thereof may be attached to at least any of the movable platen 21, the frame 500, the intermediate mold 30, and the intermediate mold support frame 31.

In addition, in a case where the sensor 200 is a laser sensor, the sensor 200 may be provided outside an end surface of the movable mold 20 in the second direction and may emit a laser beam in the second direction to detect the final molding product 600 between the movable mold 20 and the intermediate mold 30 after the mold opening is performed. In the case of this configuration, in consideration of the straightness of the laser beam, it is necessary to provide one sensor 200 at a position corresponding to each of six gripping devices 41 arranged in the up-down direction. Therefore, it is necessary to provide the six sensors 200. Even in this case, the base of the arm 210 having the sensor 200 attached to the tip part thereof may be attached to at least any of the movable mold 20, the movable platen 21, the frame 500, the intermediate mold 30, and the intermediate mold support frame 31.

In addition, even in such a configuration, the sensor 200 may be an ultrasonic sensor.

As described above, the injection blow molding machine 2 includes the sensor 200 (an example of the detection means) attached to the movable member or the gripping frame 40 to detect whether or not the final molding product 600 is present between the movable member and the gripping frame 40.

According to the injection blow molding machine 2 configured as described above, in a case where the sensor 200 detects that the final molding product 600 is present between the movable member and the gripping frame 40, the control device 70 can stop the operation of the injection blow molding machine 2. Accordingly, the final molding product 600 can be kept from being rotated between the intermediate mold 30 and the stationary mold 10. As a result, it is possible to suppress the occurrence of the adverse effects on the injection blow molding machine 2 due to the fact that the final molding product 600 is crushed by the final molding product 600 being pinched between the intermediate mold 30 and the cavity plate 13.

In the above-described injection blow molding machine 2, the sensor 200 may be attached to the upper portion of the movable member (at least any of the movable mold 20 and the movable platen 21). For example, in the above-described embodiment, the sensor 200 is attached to the upper portion of the movable mold 20. For example, since a water pipe for cooling the movable mold 20 or the like is close to the frame 500, the degree of freedom in selecting an attachment location is higher in a case where the sensor 200 is attached to the movable member than in a case where the sensor 200 is attached to the frame 500.

In addition, the injection blow molding machine 2 may include the sensor 100 according to the first embodiment in addition to the sensor 200, and the control device 70 may control the operation of the injection blow molding machine 2 based on the detection results of the sensor 100 and the sensor 200. Accordingly, the occurrence of the adverse effects on the injection blow molding machine 2 due to the fact that the final molding product 600 is crushed between the intermediate mold 30 and the cavity plate 13 is suppressed with high accuracy.

### <Third Embodiment>

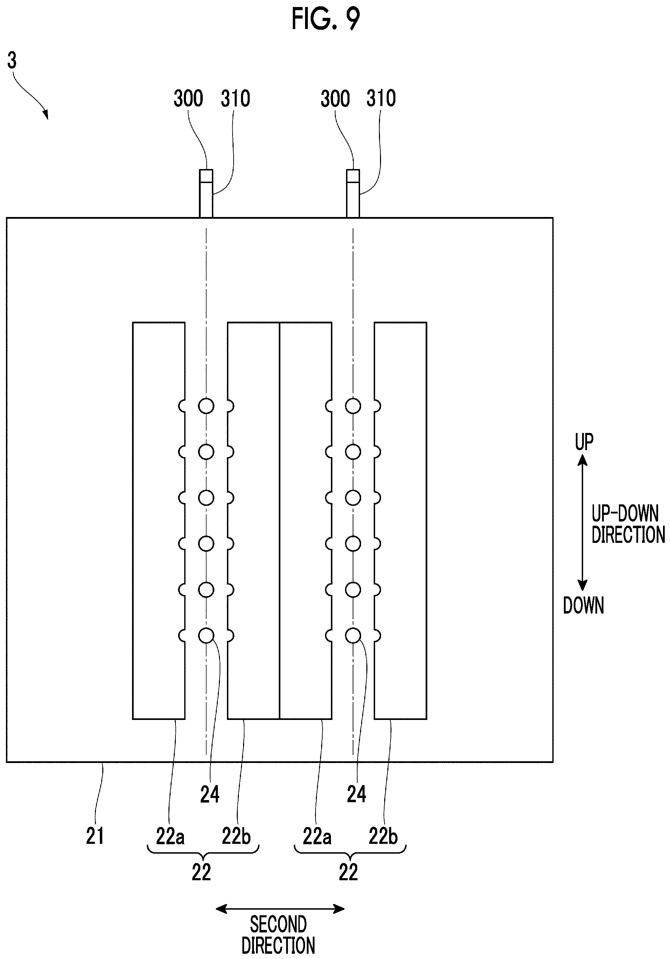

FIG. 9 is an example of a view of an injection blow molding machine 3 according to a third embodiment in the direction of the VI portion in FIG. 2.

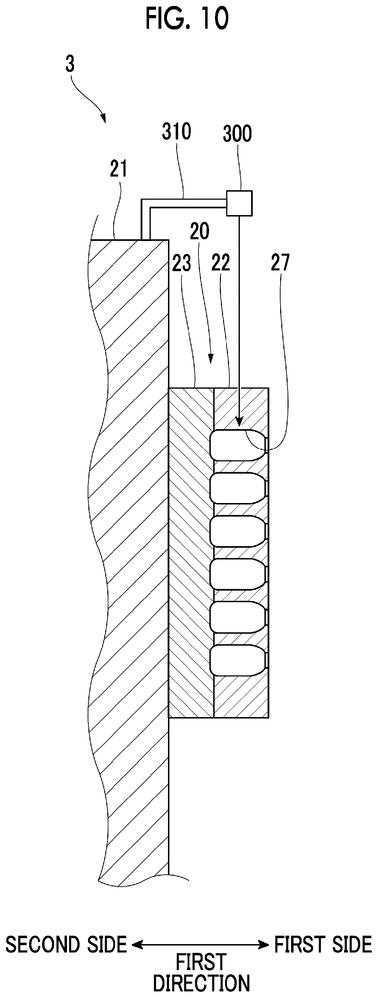

FIG. 10 is an example of a view when a sensor 300 detects that the final molding product 600 is present between the drive-side movable portion 22a and the driven-side movable portion 22b.

The injection blow molding machine 3 according to the third embodiment is different from the injection blow molding machine 1 according to the first embodiment in that the presence of the final molding product 600 between the drive-side movable portion 22a and the driven-side movable portion 22b after the mold opening is performed is detected. Hereinafter, points different from the first embodiment will be described. The same reference numerals are used for the same components in the first embodiment and the third embodiment, and detailed descriptions thereof will be omitted.

For example, in a case where the final molding product 600 remains without falling from between the drive-side movable portion 22a and the driven-side movable portion 22b after the blow molding is performed, the final molding product 600 is crushed between the drive-side movable portion 22a and the driven-side movable portion 22b at the time of the next mold closing. As a result, there is a possibility that the movable blow split mold 22, the gripping device 41, or the like may be damaged.

In the injection blow molding machine 3 according to the third embodiment, the injection blow molding machine 3 has the sensor 300 that detects that the final molding product 600 is present between the drive-side movable portion 22a and the driven-side movable portion 22b. The sensor 300 performs, for example, the blow molding to detect the presence or absence of the final molding product 600 immediately after the drive-side movable portion 22a and the driven-side movable portion 22b are mold-opened.

The sensor 300 is a laser sensor. Then, the sensor 300 is attached to an upper portion of the movable platen 21 to emit a laser beam downward. In the example shown in FIG. 10, the sensor 300 is provided such that the position thereof in the first direction is a position where the blow molding female mold 27 is formed. In addition, as shown in FIG. 10, the sensor 300 is provided such that the position thereof in the up-down direction is above the upper surface of the movable blow split mold 22. In addition, as shown in FIG. 9, two sensors 300 are provided in the second direction. In the present embodiment, a total of 12 blow molding female molds 27 are provided to form two rows each having six blow molding female molds 27 arranged in the up-down direction. Thus, as shown in FIG. 9, one sensor 300 is provided above each of the two rows.

The method of attaching the sensor 300 to the upper portion of the movable platen 21 is not particularly limited. For example, as shown in FIG. 10, the sensor 300 can be exemplified as being attached to a tip part of an arm 310 fixed to the upper surface of the movable platen 21 by a fastening member such as a bolt or a screw. As shown in FIG. 9, one sensor 300 may be attached to the tip part of one arm 310, or two sensors 300 may be attached to the tip part of one arm 310.

The base of the arm 310 having the sensor 300 attached to the tip part thereof may be attached to at least any of the movable mold 20, the frame 500, the intermediate mold 30, and the intermediate mold support frame 31.

In addition, the sensor 300 may be an ultrasonic sensor or may be a camera type sensor.

According to the injection blow molding machine 3 configured as described above, in a case where the sensor 300 detects that the final molding product 600 is present between the drive-side movable portion 22a and the driven-side movable portion 22b, the control device 70 can stop the operation of the injection blow molding machine 3. Accordingly, it is possible to suppress the occurrence of damage to the movable blow split mold 22, the gripping device 41, or the like due to the fact that the final molding product 600 is crushed between the drive-side movable portion 22a and the driven-side movable portion 22b during the next mold closing.

The injection blow molding machine 3 may include at least any one of the sensor 100 according to the first embodiment or the sensor 200 according to the second embodiment, and the control device 70 may control the operation based on the detection result of at least any of the sensor 100 and the sensor 200. Accordingly, the injection blow molding machine 3 further accurately suppresses the occurrence of the adverse effects on the injection blow molding machine 3 due to the fact that the final molding product 600 is crushed between the intermediate mold 30 and the cavity plate 13.

### Brief Description of the Reference Symbols

1, 2, 3: Injection blow molding machine
10: Stationary mold (example of stationary member)
11: Stationary platen (example of stationary member)
13: Cavity plate (example of stationary member)
20: Movable mold (example of movable member)
21: Movable platen (example of movable member)
35: Rotating frame
40: Gripping frame (example of rotating member)
41: Gripping device
42: Screw split mold
50: Core mold frame
100, 200, 300: Sensor (example of detection means)
500: Frame
600: Final molding product
610: Preform

## Claims

1. An injection blow molding machine (1, 2, 3) comprising:
a stationary member (10, 11, 13) that is fixed to a frame (500);
a movable member (20, 21) that is movable with respect to the stationary member (10, 11, 13);
a rotating member (40) that is disposed between the stationary member (10, 11, 13) and the movable member (20, 21), rotates to face the movable member (20, 21) while gripping a preform (610) after the preform (610) is molded together with the stationary member (10, 11, 13), and rotates to face the stationary member (10, 11, 13) after a final molding product (600) is molded together with the movable member (20, 21); and
a detection means (100, 200, 300) that is attached to the stationary member (10, 11, 13), the rotating member (40), or the frame (500), and detects whether or not the final molding product (600) is present between the stationary member (10, 11, 13) and the rotating member (40).

2. The injection blow molding machine (1, 2, 3) according to claim 1,
wherein the detection means (100, 200, 300) is attached to an upper portion of the stationary member (10, 11, 13).

3. The injection blow molding machine (1, 2, 3) according to claim 2,
wherein a plurality of the preforms (610) and a plurality of the final molding products (600) are molded side by side in an up-down direction, and
the detection means (100, 200, 300) performs detection in the up-down direction.

4. The injection blow molding machine (1, 2, 3) according to claim 3,
wherein the detection means (100, 200, 300) is a laser sensor that emits a laser beam downward or an ultrasonic sensor that transmits an ultrasonic wave downward.

5. An injection blow molding machine (1, 2, 3) comprising:
a stationary member (10, 11, 13) that is fixed to a frame (500);
a movable member (20, 21) that is movable with respect to the stationary member (10, 11, 13);
a rotating member (40) that is disposed between the stationary member (10, 11, 13) and the movable member (20, 21), rotates to face the movable member (20, 21) while gripping a preform (610) after the preform (610) is molded together with the stationary member (10, 11, 13), and rotates to face the stationary member (10, 11, 13) after a final molding product (600) is molded together with the movable member (20, 21); and
a detection means (100, 200, 300) that is attached to the movable member (20, 21) or the rotating member (40), and detects whether or not the final molding product (600) is present between the movable member (20, 21) and the rotating member (40).

6. The injection blow molding machine (1, 2, 3) according to claim 5,
wherein the detection means (100, 200, 300) is attached to an upper portion of the movable member (20, 21).

7. The injection blow molding machine (1, 2, 3) according to claim 5,
wherein the detection means (100, 200, 300) includes a camera (201) that images a space between the movable member (20, 21) and the rotating member (40).

8. The injection blow molding machine (1, 2, 3) according to claim 5,
wherein a plurality of the preforms (610) and a plurality of the final molding products (600) are molded side by side in an up-down direction, and
the detection means (100, 200, 300) performs detection in the up-down direction.

9. The injection blow molding machine (1, 2, 3) according to claim 8,
wherein the detection means (100, 200, 300) is an ultrasonic sensor that transmits an ultrasonic wave downward or a laser sensor that emits a laser beam downward.

10. An injection blow molding machine (1, 2, 3) comprising:
a stationary member (10, 11, 13) that is fixed to a frame (500);
a movable member (20, 21) that is movable with respect to the stationary member (10, 11, 13); and
a rotating member (40) that is disposed between the stationary member (10, 11, 13) and the movable member (20, 21), rotates to face the movable member (20, 21) while gripping a preform (610) after the preform (610) is molded together with the stationary member (10, 11, 13), and rotates to face the stationary member (10, 11, 13) after a final molding product (600) is molded together with the movable member (20, 21),
wherein a plurality of the preforms (610) and a plurality of the final molding products (600) are molded side by side in an up-down direction, and are molded side by side in a perpendicular direction perpendicular to a movement direction of the movable member (20, 21) with respect to the stationary member (10, 11, 13) and the up-down direction, and
the injection blow molding machine (1, 2, 3) further comprises
a detection means (100, 200, 300) for performing detection in a direction having a larger number out of the number of rows in the up-down direction or the number of rows in the perpendicular direction.

11. The injection blow molding machine (1, 2, 3) according to claim 10,
wherein the number of rows in the up-down direction is larger than the number of rows in the perpendicular direction, and
the detection means (100, 200, 300) is an ultrasonic sensor that transmits an ultrasonic wave downward or a laser sensor that emits a laser beam downward.

12. The injection blow molding machine (1, 2, 3) according to claim 10,
wherein the detection means (100, 200, 300) is attached to at least any of an upper portion of the stationary member (10, 11, 13) and an upper portion of the movable member (20, 21).
